(19) Europäisches Patentamt
European Patent Office
Office européen des brevets

(11) **EP 0 804 962 B1**

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(51) Int Cl.$^7$: **B01J 23/92**, B01J 38/60, B01J 21/20, B01J 23/62, C22B 34/22, C22B 34/34, C22B 34/36

(21) Anmeldenummer: **97106256.7**

(22) Anmeldetag: **16.04.1997**

(54) **Verfahren zur Herstellung von Mischoxidpulvern aus desaktivierten Katalysatoren zur Stickoxidminderung in Abgas**

Process for the production of mixed oxides powders from deactivated catalysts for the reduction of the NOx concentration in a gas stream

Procédé de préparation de poudres d'oxydes mixtes de catalyseurs desactivés pour la concentration en oxydes d'azote dans un fluide

(84) Benannte Vertragsstaaten:
**AT ES FR GB IT NL SE**

(30) Priorität: **29.04.1996 DE 19617081**

(43) Veröffentlichungstag der Anmeldung:
**05.11.1997 Patentblatt 1997/45**

(73) Patentinhaber: **Kerr-McGee Pigments GmbH & Co. KG**
**47829 Krefeld (DE)**

(72) Erfinder:
• **Kischkewitz, Jürgen, Dr.**
**40883 Ratingen (DE)**
• **Linde, Günter, Dr.**
**47800 Krefeld (DE)**
• **Schittenhelm, Hans-Joachim, Dr.**
**51065 Köln (DE)**

• **Lailach, Günter, Dr.**
**47799 Krefeld (DE)**
• **Bütje, Kai, Dr.**
**47229 Duisburg (DE)**

(74) Vertreter: **Hansen, Bernd, Dr. Dipl.-Chem. et al Hoffmann Eitle,**
**Patent- und Rechtsanwälte,**
**Postfach 81 04 20**
**81904 München (DE)**

(56) Entgegenhaltungen:
DE-A- 2 127 348    DE-A- 3 816 600
DE-A- 3 903 590    DE-A- 4 242 978

• **PATENT ABSTRACTS OF JAPAN vol. 003, no. 055 (C-045), 11.Mai 1979 & JP 54 032114 A (SUMITOMO CHEM CO LTD), 9.März 1979,**

EP 0 804 962 B1

**Beschreibung**

Die vorliegende Erfindung betrifft ein Verfahren zur Wiederaufbereitung desaktivierter DENOX-Katalysatoren auf der Basis von Ti/V/Mo/W-Mischoxiden.

Zur Entfernung von Stickoxiden aus Abgasen, beispielsweise von Kraftwerks- oder Müllverbrennungsanlagen sowie von Dieselmotoren durch selektive katalytische Reduktion (SCR) mit Ammoniak, z.B. gemäß

$$4\,NO + 4\,NH_3 + O_2 \rightarrow 4\,N_2 + 6\,H_2O$$

kommen großtechnisch Katalysatoren zum Einsatz, die auf einem Träger aus Titandioxid der Anatasmodifikation als katalytisch aktive Komponenten Oxide der Elemente V, Mo und W enthalten. Hinzu kommen Bestandteile zur Verbesserung der mechanischen Festigkeit, wie Glasfasern und Tone oder andere Silikate. Diese Katalysatoren sind unter anderem aus DE-A 24 58 888 bekannt.

Während ihrer Standzeit werden die Katalysatoren durch Ablagerungen von Arsen, Thallium und Alkalimetallsalzen aus der Flugasche vergiftet, wodurch ihre Aktivität nachläßt. Gebrauchte Katalysatoren sind aufgrund ihrer Gehalte an den hochtoxischen Elementen As und Tl, die bis zu 1 000 ppm betragen und in Ausnahmefällen sogar noch darüber liegen können, als Sondermüll einzustufen, der nur mit hohem Aufwand entsorgt werden kann.

In DE-A 40 13 720 ist vorgeschlagen worden, den gebrauchten DENOX-Katalysator in geschmolzene Asche der Schmelzkammerfeuerung eines Kohlekraftwerks einzuarbeiten, wobei ein Schmelzkammergranulat anfällt, das hinsichtlich der Eluierbarkeit der genannten hochtoxischen Komponenten unkritisch ist und deponiert werden kann.

Da es aber grundsätzlich nicht wünschenswert ist, die Wertstoffe Ti, Mo und W zu deponieren, und zudem die Gesetzgebung der Wiederverwertung Priorität gegenüber der Deponierung einräumt, besteht Bedarf an einem Verfahren zur Wiederaufbereitung desaktivierter DENOX-Katalysatoren unter Rückgewinnung der Wertstoffe und Abtrennung der Katalysatorgifte.

Die nach dem Stand der Technik gebräuchlichen Verfahren zur Reaktivierung verbrauchter DENOX-Katalysatoren lassen sich in 4 Gruppen einteilen:

A) Mechanische Reinigung:

Aus JP-61-259 764 ist bekannt, Katalysatoren durch Bürsten mit Stahlbürsten zu reinigen. Eine abrasive Behandlung mit Sand oder ähnlichem wird in EP-A 241 310 und mit Flugasche in JP-61-227 846 vorgeschlagen. Mit diesen Verfahren werden jedoch die desaktivierten Stellen in den Poren nicht erreicht.

B) Thermische Behandlung, auch unter Zusatz von Gasen:

In DE-A 43 19 733 wird vorgeschlagen, Arsen und andere sublimierbare Verunreinigungen durch eine thermische Behandlung zu entfernen. Nach EP-A 303 560 können Katalysatoren mit heißem Wasserdampf regeneriert werden, wobei ein Teil des Arsens von der Katalysatoroberfläche ins Innere wandert. Nach JP-60-202 717 oder JP-61-178 040 wird die Regenerierung durch Kontakt mit $SO_2$- bzw. $SO_3$-Gas erreicht. Diese Methoden haben jedoch den Nachteil, daß bei thermischer Behandlung mit einem Aktivitätsverlust durch Teilchenvergröberung des Trägers und durch eventuelle Rutilisierung gerechnet werden muß. Bei dem Verfahren nach DE-A 43 00 933, das das Erhitzen des Katalysators erst in $H_2$-Atmosphäre und dann in einem oxidierenden Gas vorsieht, besteht das zusätzliche Problem der Handhabung des hochentzündlichen Wasserstoffs bei hoher Temperatur.

C) Laugung mit Wasser, Säuren, Basen oder anderen Regenerierlösungen:

Bekannt ist die Behandlung mit Wasser, auch unter Anwendung von Ultraschall (JP-58-186 445, JP-62-61 647), mit anorganischen Säuren, insbesondere Schwefelsäure, auch unter $H_2O_2$-Zusatz (JP-54-11 094, DE-A 38 16 600, EP-A 159 959), mit Oxalsäure (EP-A 161 206), mit wäßrigen Lösungen von Alkali-, Erdalkalihydroxiden und Alkalicarbonaten, gefolgt von verdünnten Säuren (DE-A 38 24 464) und mit wäßrigem $NH_3$ (JP-52-63 891). All diesen Methoden haftet jedoch der Nachteil an, daß eine scharfe Trennung zwischen Wert- und Schadstoffen nicht erreicht wird. Die Regenerierflüssigkeiten enthalten nach Gebrauch neben den abgetrennten Katalysatorgiften, wie As und Tl, einen mehr oder weniger großen Anteil z.B. des Vanadiums und Wolframs, so daß eine entsprechende Nachimprägnierung des Katalysators erforderlich ist (EP-A 161 206, JP-54-10 294), und die Regenerierflüssigkeit selbst mit hohem Aufwand aufgearbeitet werden muß (EP-A 499 351).

D) Recycling:

a) Sulfatverfahren: Nach Aufschluß der Altkatalysatormasse mit $H_2SO_4$ resultiert eine Titanylsulfatlösung, die zusätzlich die Komponenten V, Mo, W, As und/oder Tl enthält. Hieraus wird Arsen durch Extraktion mit einem Thiophosphorsäurederivat (DE-A 39 03 590) oder destillativ als $AsCl_3$ (DE-A 42 42 978) abgetrennt und das Mischoxid durch Fällung oder Hydrolyse zurückgewonnen. Diese Abtrennungsverfahren sind jedoch aufwendig, und über den Verbleib des Thalliums wird nichts ausgesagt.

b) Chloridverfahren: Nach DE-A-43 25 690 wird die Altkatalysatormasse einer reduktiven Chlorierung unterworfen, das erhaltene $TiCl_4$ destillativ gereinigt und mit Sauerstoff zu $TiO_2$ umgesetzt. Nach diesem Verfahren ist es jedoch nicht möglich, die für DENOX-Katalysatoren gewünschte Anatasmodifikation zu erhalten. Die destillative Trennung von $TiCl_4$ und $AsCl_3$ ist aufgrund der geringen Differenz der Siedepunkte (136 bzw. 131°C) sehr schwierig.

Gemäß DE-A 24 58 888 besteht ein DENOX-Katalysator beispielsweise aus einer innigen Mischung der Komponenten

(A) Titan in Form von Oxiden

(B) wenigstens einem Metall aus der Gruppe

B.1 Eisen und Vanadium in Form von Oxiden und/oder Sulfaten und/oder der Gruppe
B.2 Molybdän, Wolfram, Nickel, Kobalt, Kupfer, Chrom und Uran in Form von Oxiden

(C) Zinn in Form von Oxiden

(D) Metalle aus der Gruppe Beryllium, Magnesium, Zink, Bor, Aluminium, Yttrium, Seltenerdelemente, Silicium, Niob, Antimon, Bismut und Mangan in Form von Oxiden,

wobei die Komponenten in den Atomverhältnissen A zu B zu C zu D = 1 zu (0,01 bis 10) zu (0 bis 0,2) zu (0 bis 0,15) vorhanden sind.

Die bevorzugten Elemente sind Vanadium aus der Gruppe B 1 sowie Molybdän und Wolfram aus der Gruppe B 2.

Während ihrer Standzeit werden die Katalysatoren insbesondere duch Ablagerungen von Arsen, Thallium und Alkalimetallsalzen aus der Flugasche vergiftet, wodurch ihre Aktivität nachläßt. In Abhängigkeit von den Einsatzbedingungen der Katalysatoren beträgt der Gehalt an Schadstoffen wie Arsen und Thallium gewöhnlich bis zu 1 000 ppm und in Ausnahmefällen auch mehr als 1 000 ppm.

Der vorliegenden Erfindung lag somit die Aufgabe zugrunde, ein Verfahren zur Wiederaufbereitung desaktivierter DENOX-Katalysatoren zur Verfügung zu stellen, das die möglichst quantitative Abtrennung der unerwünschten Bestandteile As und Tl von den Wertstoffen gewährleistet, wirtschaftlich und großtechnisch realisierbar ist.

Diese Aufgabe konnte erfindungsgemäß durch ein Recyclingverfahren im Rahmen des $TiO_2$-Sulfatprozesses gelöst werden.

Gegenstand der Erfindung ist ein Verfahren zur Herstellung von Mischoxidpulvern aus desaktivierten DENOX-Katalysatoren durch Recycling, dadurch gekennzeichnet, daß

a) der desaktivierte DENOX-Katalysator zerkleinert wird,
b) das zerkleinerte Material aus Schritt a) zur Entfernung des Thalliums mit einer wäßrigen Mineralsäure behandelt wird,
c) das von Thallium befreite Material aus Schritt b) mit Schwefelsäure und/oder Oleum aufgeschlossen wird,
d) der in Schritt c) erhaltene Aufschlußkuchen in Wasser oder verdünnter Schwefelsäure aufgenommen wird und die ungelösten Bestandteile abgetrennt werden,
e) die in Schritt d) erhaltene Lösung von Arsen befreit wird,
f) die von Arsen befreite Lösung aus Schritt e) hydrolysiert, anschließend filtriert wird und die anfallende verdünnte Schwefelsäure gegebenenfalls aufgearbeitet wird,
g) das in Schritt f) erhaltene Hydrolysat gegebenenfalls nach einer Nachdotierung mit Verbindungen von einem oder mehreren Elementen aus der Gruppe W, Mo und V getrocknet und zum Endprodukt kalziniert wird.

Die Altkatalysatoren können bei Bedarf vor Schritt a) mechanisch gereinigt werden, um Asche und oberflächliche Ablagerungen von Katalysatorgiften zu entfernen.

Vorzugsweise wird der desaktivierte DENOX-Katalysator auf eine mittlere Teilchengröße von 1-50 μm aufgemahlen.

Die zur Entfernung des Thalliums aus dem gemahlenen desaktivierten DENOX-Katalysator verwendete Mineralsäure ist bevorzugt Salzsäure. Die Konzentration der eingesetzten Salzsäure liegt vorzugsweise zwischen 10 und 20 Gew.-%. Vorzugsweise erfolgt die Behandlung mit Salzsäure bei 60 bis 100°C, besonders bevorzugt bei 70 bis 90°C. Die Behandlungsdauer kann vorzugsweise 60 bis 180 Minuten betragen, wobei der Feststoffgehalt der Suspension bevorzugt unter 30 Gew.-%, vorzugsweise zwischen 15 und 25 Gew.-% liegen sollte.

Durch die Behandlung mit Salzsäure werden erfindungsgemäß mehr als 95 % des Thalliums aus dem Altkatalysator entfernt. Die Wertstoffe verbleiben im Feststoff.

Die Wirtschaftlichkeit der erfindungsgemäßen Behandlung mit Mineralsäure wird dadurch erhöht, daß die mit Tl belastete Mineralsäure ohne zwischenzeitliche Aufarbeitung für die Behandlung weiterer Altkatalysatorchargen genutzt werden kann. Ein nennenswerter Abfall der Lösekapazität für das Thallium tritt überraschenderweise erst nach mehrmaliger Nutzung auf.

Vorzugsweise wird die mit Thallium belastete Mineralsäure aufgearbeitet. Dabei wird das Thallium bevorzugt gefällt, z.B. als Iodid, oder durch Eindampfen der salzsauren Lösung als festes Chlorid gewonnen. Das Thalliumkonzentrat kann weiterverarbeitet oder deponiert werden.

Nach der Thalliumextraktion wird vorzugsweise die Katalysatormasse mit Schwefelsäure chloridfrei gewaschen.

In einer weiteren Ausführungsform kann die TlCl-haltige Salzsäure mit reiner Salzsäure verdrängt werden.

Der Aufschluß in Schritt c) verfolgt, wie aus dem Stand der Technik bekannt, batchweise oder kontinuierlich mit Schwefelsäure und/oder Oleum bei Temperaturen von 100 bis 330°C, vorzugsweise bei 150 bis 300°C.

Das Gewichtsverhältnis von Schwefelsäure zu Titandioxid beträgt vorzugsweise 1,0 bis 6,0, besonders bevorzugt 1,5 bis 3,0. Als Aufschlußsäuren sind Frischsäuren und wiederaufgearbeitete Säuren einsetzbar. Die Konzentration der Säuren beträgt mindestens 20 Gew.-% $H_2SO_4$. Am besten geeignet sind Säurekonzentrationen zwischen 65 und 96 Gew.-% $H_2SO_4$. Bereits zu Anfang sollte eine gute Durchmischung und ein guter Wärmeübergang eingehalten werden.

In einer besonderen Ausführungsform des erfindungsgemäßen Verfahrens kann die aufgeschlossene Masse im Anschluß einer Wärmebehandlung unterzogen werden. Die Dauer der Wärmebehandlung liegt vorzugsweise bei 0,5 bis 5 Stunden und die Temperatur bei max. 350°C, bevorzugt bei 150 bis 250°C.

Die Aufschlußmasse wird, wie allgemein bekannt, in Wasser oder verdünnter Schwefelsäure aufgenommen. Das Auflösen kann in einem ein- oder mehrstufigen Prozeß erfolgen, wobei eine kontinuierliche Arbeitsweise im Gleich- oder Gegenstrom besonders wirtschaftlich ist.

Die Abtrennung der ungelösten Bestandteile erfolgt in bekannter Weise, z.B. durch Sedimentation und/oder Filtration, gegebenenfalls unter Zusatz von Filterhilfsmitteln. Die Rückstände können gewaschen und einer Verarbeitung oder Deponierung zugeführt werden.

Die beim Waschen des Rückstandes anfallenden Lösungen, die geringe Mengen Schwefelsäure und Titanylsulfat enthalten, können in den Löseschritt unter d) zurückgeführt werden.

Die von den ungelösten Bestandteilen befreite Lösung enthält noch Arsen. Die Entfernung des Arsens kann entweder durch Extraktion, Destillation oder Sulfidfällung erfolgen.

Die Fällung des Arsensulfids kann bevorzugt mittels Schwefelwasserstoff, Diphosphorpentasulfid oder Eisensulfid erfolgen. Besonders bevorzugt wird Arsen mit $P_2S_5$ ausgefällt, wobei die Lösung vorzugsweise auf 50 bis 70°C erhitzt und das Fällungsmittel im bis zu 10fachen Überschuß gegenüber der stöchiometrischen Menge zugegeben wird. Bevorzugt wird die Mischung nach der Zugabe des Fällungsmittels weitere 1 bis 3 Stunden bei der Reaktionstemperatur gerührt.

Die Fällung mit $H_2S$ oder Eisensulfid wird vorzugsweise unter erhöhtem Druck durchgeführt.

Überraschend werden dabei mehr als 99 % des Arsens als leicht filtrierbares Sulfid gefällt.

Die von Tl und As befreite schwefelsaure Lösung wird anschließend, wie aus dem Stand der Technik bekannt, hydrolysiert, wobei das Titan zusammen mit den übrigen Wertstoffen in Form von Oxidhydraten ausfällt. Die Hydrolyse kann entweder thermisch, gegebenenfalls in Gegenwart von Keimen, oder durch Neutralisation erfolgen.

Zur quantitativen Fällung der Wertstoffe bei der thermischen Hydrolyse wird die Titanylsulfatlösung bevorzugt auf 200 bis 280 g/l $TiO_2$ und ein Gewichtsverhältnis von Schwefelsäure zu Titandioxid zwischen 1,5 und 3,0 eingestellt. Es ist besonders wirtschaftlich, diese Vorgaben bereits beim Aufschluß einzustellen.

Die Oxidhydrate werden in bekannter Weise von der Schwefelsäure abgetrennt und weiterverarbeitet.

Das As- und Tl-freie Hydrolysat enthält außer $TiO_2$-Hydrat 5 bis 10 Gew.-% Sulfat (bezogen auf $TiO_2$) und Molybdän-/Wolframoxid in dem durch die Zusammensetzung der zu hydrolysierenden Lösung vorgegebenen Gewichtsverhältnis zu $TiO_2$, üblicherweise etwa 5 bis 10 Gew.-%. Das Hydrolysat entspricht somit abgesehen vom $MoO_3$/ $WO_3$-Gehalt den gereinigten Hydrolysaten des Sulfatprozesses, wie sie in Ullmann's Encyclopeadia of Industrial Chemistry, 5. Ed., Vol. A 20, p. 278-279, beschrieben sind.

Vor der Weiterverarbeitung zu einem zur Fertigung von DENOX-Katalysatoren geeigneten Mischoxidpulver kann der Sulfatgehalt des Hydrolysates erniedrigt werden.

Dies kann entsprechend EP-A 390 059 durch die Zugabe von wäßriger Ammoniak- oder Ammoniumcarbonatlösung bis in den schwach alkalischen Bereich erfolgen, wodurch ein Teil des Sulfats desorbiert und in Ammoniumsulfat überführt wird. Bei der anschließenden Kalzination wird das Ammoniumsulfat durch Sublimation entfernt.

In einer weiteren bevorzugten, ökologisch besonders vorteilhaften Ausführungsform kann die Absenkung des Sulfatgehaltes gemäß DE-A 43 21 555 durch eine Erhöhung des pH-Wertes der schwefelsäure- und $MoO_3$/$WO_3$-haltigen $TiO_2$-Hydratsuspension mit wäßriger Alkalimetall-hydroxid- oder -carbonatlösung, Filtration und sorgfältige Auswaschung des Niederschlages zur Abtrennung des Alkalisulfats erfolgen.

Ein intensives Waschen wird bevorzugt zur Entfernung der als Katalysatorgift bekannten Alkaliionen durchgeführt (J. P. Chen und R. T. Yang, J. Cat. 125, 411-420 (1990); dies., Appl. Cat. A 80, 135-148 (1992)).

Überraschend wurde gefunden, daß bei der pH-Einstellung nur Sulfat desorbiert und in auswaschbares Alkalisalz überführt wird, nicht aber das zusammen mit dem $TiO_2$ ausgefallene Molybdän-/Wolframoxid. Bei der Filtration und Waschung werden somit nur die unerwünschten Komponenten Sulfat und Alkaliionen entfernt, ohne daß es zu Wertstoffverlusten kommt.

Vor der Kalzination kann das gegebenenfalls sulfatabgereicherte Zwischenprodukt nachdotiert werden.

In diesem Fall werden dem Zwischenprodukt weitere Komponenten, z.B. Verbindungen katalytisch aktiver Elemente, hinzugefügt.

Solche Verbindungen sind beispielsweise die Ammoniumsalze von Mono- und Isopolysauerstoffanionen der Elemente W, Mo und V in ihren höchsten Oxidationsstufen, z.B. Ammoniumparawolframat, Ammoniumheptamolybdat und Ammoniummonovanadat.

Das so erhaltene Material wird entsprechend dem Stand der Technik getrocknet und kalziniert. Als Endprodukt erhält man ein zur Herstellung von DENOX-Katalysatoren geeignetes arsen- und thalliumfreies Mischoxidpulver.

Die bei der Hydrolyse anfallende verdünnte Schwefelsäure, die als Hauptverunreinigung geringe Mengen an Vanadiumsulfat enthält, wird bevorzugt aufgearbeitet. Dies kann beispielsweise durch Neutralisation mit Kalk unter Bildung von Gips erfolgen. Alternativ kann die Schwefelsäure aufkonzentriert und wiederverwendet werden, z.B. für den Aufschluß von desaktivierten DENOX-Katalysatoren oder Titanerzen, gegebenenfalls unter Zugabe von Frischsäuren und/oder Oleum.

Das Aufkonzentrieren wird vorteilhaft gemeinsam mit eisensulfathaltiger Dünnsäure aus dem $TiO_2$-Sulfatprozeß, z.B. entsprechend EP-A 133 505 durchgeführt. Dabei wird das Vanadiumsulfat mit den anderen Metallsulfaten aus ca. 65 gew.-%iger Schwefelsäure abgetrennt.

Wenn keine Aufarbeitungsanlage für Dünnsäure aus einer $TiO_2$-Pigmentproduktion zur Verfügung steht, kann die bei der Altkatalysatoraufarbeitung anfallende Dünnsäure in prinzipiell bekannter Weise aufkonzentriert werden.

Das erfindungsgemäße Verfahren soll anhand des nachfolgenden Beispieles näher erläutert werden, ohne daß hierin eine Einschränkung zu sehen ist.

**Beispiel**

**Tl-Abtrennung:**

1 Gewichtsteil eines auf eine durchschnittliche Teilchengröße von 5,2 μm gemahlen, desaktivierten DENOX-Katalysators der Zusammensetzung 80,0 Gew.-% $TiO_2$, 8,8 Gew.-% $WO_3$, 315 ppm As, 270 ppm Tl wurde mit 4 Gewichtsteilen einer 15 gew.-%igen Salzsäure 2 Stunden bei 80°C gerührt. Nach dem Abkühlen der Suspension auf 60°C wurde das Tl-haltige Eluat abfiltriert und der Filterkuchen mit Wasser chloridfrei gewaschen.

Das Tl-haltige Eluat wurde in gleicher Weise für die Laugung von weiteren 9 Chargen des desaktivierten DENOX-Katalysators verwendet. Die vereinigten Filterkuchen enthielten im Durchschnitt weniger als 8 ppm Thallium.

Nach der Mehrfachlaugung wurde die salzsaure Lösung am Rotationsverdampfer bis zu einer Thalliumkonzentration von 4,5 g/l eingeengt, wobei das Thallium als festes Chlorid anfiel.

**Aufschluß:**

Der von Thallium befreite und chloridfrei gewaschene Filterkuchen mit einer durchschnittlichen Teilchengröße von 5,2 μm wurde durch Zusatz von konzentrierter Schwefelsäure und Oleum auf eine Säurezahl von 2,0 (Gewichtsverhältnis Schwefelsäure (100 %ig) : Titandioxid) und eine Säurekonzentration von 86 Gew.-% eingestellt und in einem indirekt beheizten Aufschlußreaktor bei 250°C mit einem Durchsatz von 6,6 kg Suspension/h kontinuierlich aufgeschlossen. Die Ausbeute an $TiO_2$ bzw. $WO_3$ (bezogen auf $TiO_2$ bzw. $WO_3$ im Aufgabegut) betrug 99,5 % bzw. >99 %.

**Lösen / Filtrieren:**

Der Aufschlußkuchen wurde durch Zugabe von Wasser innerhalb von 6 Stunden gelöst und auf eine Konzentration von 260 g $TiO_2$/l eingestellt. Die so gewonnene schwefelsaure Lösung wurde über eine Filterpresse von nicht aufgeschlossenen Bestandteilen befreit.

**Arsenfällung / Abtrennung:**

1 kg dieser wolframhaltigen Titanylsulfatlösung mit einem Arsen-Gehalt von 100 mg/l wurde mit 1,3 g Diphosphorpentasulfid versetzt und während 2 Stunden bei 60°C gerührt. Das gefällte Arsensulfid wurde anschließend durch Filtration abgetrennt. Die filtrierte Lösung enthielt danach weniger als 1 mg/l Arsen.

**Hydrolyse / Filtration:**

Die so gewonnene Lösung wurde anschließend hydrolysiert. Hierzu wurde 1 kg Titanylsulfatlösung, die 260 g $TiO_2$/l und 32,4 g $WO_3$/l in gelöster Form enthielt und in der das Gewichtsverhältnis Schwefelsäure zu Titandioxid 2,0 betrug, 45 Minuten bei Siedetemperatur und danach weitere 250 Minuten bei 105°C gerührt. Während des Aufheizens wurden bei Erreichen einer Temperatur von 90°C 27 ml eines Titandioxid-Keimsols zugegeben.
Zur Herstellung des Keimsols wurden 175 ml der oben genannten Lösung mit einem Gehalt von 260 g $TiO_2$/l auf 90°C erwärmt und innerhalb von 3 Minuten zu 100 ml einer 60°C heißen 7,5 gew.-%igen Natronlauge gegeben. Nach dem Aufklaren war das Keimsol gebrauchsfertig.
70 Minuten nach dem Absenken der Temperatur auf 105°C wurde der Gehalt an $TiO_2$ bei unveränderter Hydrolysetemperatur durch Verdünnen mit 2116 ml Wasser auf 160 g $TiO_2$/l abgesenkt. Die Zudosierung des Wassers geschah kontinuierlich innerhalb von 120 Minuten. Die gefällten Oxidhydrate wurden abfiltriert und mit Wasser gewaschen. Die Ausbeute an $TiO_2$ und $WO_3$ lag über 98 %, bezogen auf eingesetzte Titanylsulfatlösung. Die anfallende verdünnte Schwefelsäure wurde durch Eindampfen auf 65 Gew.-% $H_2SO_4$ konzentriert, so daß in Kombination mit konzentrierter Schwefelsäure oder Oleum eine Wiederverwendung für den Aufschluß möglich war.

**pH-Einstellung / Sulfatabtrennung / Trocknung:**

Das gewaschene Hydrolysat wurde mit Wasser zu einer 20 gew.-%igen Suspension angemaischt.
3 750 g der Suspension, entsprechend 750 g $TiO_2$ + $WO_3$, mit einem pH-Wert von 1,2 wurden auf 60°C erwärmt und unter Rühren mit 50,6 gew.-%iger wäßriger Natriumhydroxidlösung bis zu einem pH-Wert von 5,2 versetzt. Hierzu wurden 84,6 g der Natriumhydroxidlösung verbraucht. Die Oxidhydrate wurden über Polyester-Filtertücher abgesaugt, mit 80°C heißem Wasser gewaschen und anschließend bei maximal 130°C getrocknet. Die $WO_3$-Gehalte der Belade- und Waschfiltrate lagen unter der Nachweisgrenze von 0,01 mg/l.

**Kalzination:**

60 g dieses Zwischenproduktes wurden für eine Stunde in einem Quarzkolben unter Drehen bei 580°C kalziniert. Es wurden 56,4 g eines zur Herstellung von DENOX-Katalysatoren geeigneten Mischoxidpulvers mit folgenden analytischen Daten erhalten:

| | |
|---|---|
| $TiO_2$ | 87,6 Gew.-% |
| $WO_3$ | 10,4 Gew.-% |
| $SO_4^{2-}$ | 1,7 Gew.-% |
| $Na_2O$ | 85 ppm |
| As | 4 ppm |
| Tl | 4 ppm |
| spez. Oberfläche* | 95 $m^2$/g |

* bestimmt nach BET-Einpunkt-Methode, Trägergas He/$N_2$ (90/10 Vol.-%), 1 h Ausheizen bei 140°C.

**Vergleichsbeispiel**

Ein nach demselben Verfahren, nur ohne die Teilschritte Thalliumabtrennung und Arsenabtrennung, hergestelltes Mischoxidpulver hatte, ausgehend von demselben desaktivierten DENOX-Katalysator, folgende analytische Zusammensetzung:

| | |
|---|---|
| $TiO_2$ | 86,2 Gew.-% |
| $WO_3$ | 10,8 Gew.-% |
| $SO_4^{2-}$ | 1,95 Gew.-% |

(fortgesetzt)

| Na$_2$O | 45 ppm |
|---|---|
| As | 248 ppm |
| Tl | 200 ppm |
| spez. Oberfläche * | 84,2 m$^2$/g |

Die Beispiele zeigen, daß durch das erfindungsgemäße Verfahren der Gehalt an Arsen und Thallium im Katalysatorvorprodukt von 248 ppm auf 4 ppm Arsen (entsprechend um 98,6 %) bzw. von 200 ppm auf 4 ppm Thallium (entsprechend um 98 %) gesenkt werden kann. Somit ist es möglich, desaktivierte DENOX-Katalysatoren vollständig aufzuarbeiten und wieder zu verwenden.

**Patentansprüche**

1. Verfahren zur Herstellung von Mischoxidpulvern aus desaktivierten DENOX-Katalysatoren durch Recycling, **dadurch gekennzeichnet, daß**

   a) der desaktivierte DENOX-Katalysator zerkleinert wird,
   b) das zerkleinerte Material aus Schritt a) zur Entfernung des Thalliums mit einer wäßrigen Mineralsäure behandelt wird,
   c) das von Thallium befreite Material aus Schritt b) mit Schwefelsäure und/oder Oleum aufgeschlossen wird,
   d) der in Schritt c) erhaltene Aufschlußkuchen in Wasser oder verdünnter Schwefelsäure aufgenommen wird und die ungelösten Bestandteile abgetrennt werden,
   e) die in Schritt d) erhaltene Lösung von Arsen befreit wird,
   f) die von Arsen befreite Lösung aus Schritt e) hydrolysiert, anschließend filtriert wird und die anfallende verdünnte Schwefelsäure gegebenenfalls aufgearbeitet wird,
   g) das in Schritt f) erhaltene Hydrolysat gegebenenfalls nach einer Nachdotierung mit Verbindungen aus einem oder mehreren Elementen aus der Gruppe W, Mo und V getrocknet und zum Endprodukt kalziniert wird.

2. Verfahren gemäß Anspruch 1, **dadurch gekennzeichnet, daß** der desaktivierte DENOX-Katalysator in Schritt a) auf eine mittlere Teilchengröße von 1-50 µm aufgemahlen wird.

3. Verfahren gemäß Anspruch 1 oder 2, **dadurch gekennzeichnet, daß** in Schritt b) als Mineralsäure Salzsäure verwendet wird.

4. Verfahren gemäß Anspruch 3, **dadurch gekennzeichnet, daß** die Konzentration der Salzsäure zwischen 10 und 20 Gew.-% liegt.

5. Verfahren gemäß einem oder mehreren der Ansprüche 1 bis 4, **dadurch gekennzeichnet, daß** in Schritt e) das Arsen durch Extraktion abgetrennt wird.

6. Verfahren gemäß einem oder mehreren der Ansprüche 1 bis 4, **dadurch gekennzeichnet, daß** in Schritt e) das Arsen durch Destillation abgetrennt wird.

7. Verfahren gemäß einem oder mehreren der Ansprüche 1 bis 4, **dadurch gekennzeichnet, daß** in Schritt e) das Arsen durch Sulfidfällung abgetrennt wird.

8. Verfahren gemäß Anspruch 7, **dadurch gekennzeichnet, daß** die Sulfidfällung des Arsens mit Diphosphorpentasulfid erfolgt.

9. Verwendung des nach dem Verfahren gemäß den Ansprüchen 1 bis 8 hergestellten Mischoxidpulvers zur Herstellung von DENOX-Katalysatoren.

**Claims**

1. Process for producing mixed oxide powders from deactivated DENOX catalysts by recycling, **characterised in that**

   a) the deactivated DENOX catalyst is comminuted,
   b) the comminuted material from step a) is treated using an aqueous mineral acid to remove the thallium,
   c) the material freed of thallium from step b) is digested using sulphuric acid and/or oleum,
   d) the digested cake obtained in step c) is taken up in water or dilute sulphuric acid and the undissolved constituents are separated off,
   e) the solution obtained in step d) is freed of arsenic,
   f) the solution freed of arsenic from step e) is hydrolysed, then filtered and the accumulating dilute sulphuric acid is optionally worked up,
   g) the hydrolysate obtained in step f) is dried, optionally after redoping using compounds from one or more elements of the group W, Mo and V, and calcined to give the final product.

2. Process according to claim 1, **characterised in that** the deactivated DENOX catalyst in step a) is ground to an average particle size of 1-50 µm.

3. Process according to claim 1 or 2, **characterised in that** hydrochloric acid is used as mineral acid in step b).

4. Process according to claim 3, **characterised in that** the concentration of the hydrochloric acid lies between 10 and 20 wt.%.

5. Process according to one or more of claims 1 to 4, **characterised in that** in step e) the arsenic is separated off by extraction.

6. Process according to one or more of claims 1 to 4, **characterised in that** in step e) the arsenic is separated off by distillation.

7. Process according to one or more of claims 1 to 4, **characterised in that** in step e) the arsenic is separated off by sulphide precipitation.

8. Process according to claim 7, **characterised in that** the sulphide precipitation of arsenic is effected using diphosphorus pentasulphide.

9. Use of the mixed oxide powder produced by the process according to claims l to 8 for producing DENOX catalysts.


**Revendications**

1. Procédé de préparation de poudres d'oxydes mixtes de catatalyseurs DENOX désactivés, par recyclage, **caractérisé en ce que** :

   a) le catalyseur DENOX désactivé est broyé,
   b) le matériau broyé issu de l'étape a) est traité avec un acide minéral aqueux pour éliminer le thalium,
   c) le matériau débarrassé du thalium, issu de l'étape b), est dissous avec de l'acide sulfurique et/ou un oléum,
   d) le gâteau de dissolution obtenu à l'étape c) est absorbé dans de l'eau ou de l'acide sulfurique dilué et les constituants non dissous sont séparés,
   e) la solution obtenue à l'étape d) est débarrassée de l'arsenic,
   f) la solution débarrassée de l'arsenic issue de l'étape
   e) est hydroliSée, puis filtrée et l'acide sulfurique dilué produit est, le cas échéant, traité,
   g) l'hydrolysat obtenu à l'étape f) est séché, le cas échéant après un redopage avec des combinaisons issues d'un ou plusieurs éléments du groupe W, Mo et V et calciné pour donner le produit final.

2. Procédé selon la revendication 1, **caractérisé en ce que** le catalyseur DENOX désactivé est broyé à l'étape a) pour obtenir une taille de particule moyenne de 1 à 50 µm.

3. Procédé selon la revendication 1 ou 2, **caractérisé en ce qu'**on utilise à l'étape b), comme acide minéral, de l'acide chlorydrique.

4.  Procédé selon la revendication 3, **caractérisé en ce que** la concentration en acide chlorydrique est comprise entre 10 et 20 % en poids.

5.  Procédé selon une ou plusieurs des revendications 1 à 4, **caractérisé en ce qu'**à l'étape e) l'arsenic est séparé par extraction.

6.  Procédé selon une ou plusieurs des revendications 1 à 4, **caractérisé en ce qu'**on sépare à l'étape e) l'arsenic par distillation.

7.  Procédé selon une ou plusieurs des revendications 1 à 4, **caractérisé en ce qu'**on sépare à l'étape e) l'arsenic. par précipitation aux sulfures.

8.  Procédé selon la revendication 7, **caractérisé en ce que** la précipitation aux sulfures de l'arsenic s'effectue avec du diphosphorpentasulfure.

9.  Utilisation de la poudre d'oxydes mixtes préparée par le procédé selon les revendications 1 à 8, pour fabriquer des catalyseurs DENOX.